# EUROPÄISCHE PATENTSCHRIFT

(11) **EP 0 387 780 B1**
(45) Veröffentlichungstag und Bekanntmachung des Hinweises auf die Patenterteilung: **09.06.1993**
(21) Anmeldenummer: 90104709.2
(22) Anmeldetag: 13.03.1990
(51) Int. Cl.: B01D 17/025

(54) **Flüssigkeitsabscheider**
Liquid separator
Séparateur de liquide

(30) Priorität: 15.03.1989 DE 3908355
(43) Veröffentlichungstag der Anmeldung: 19.09.1990
(73) Patentinhaber: Benkeser, Michael, Dipl.-Ing. (FH), D-77886 Lauf (DE)
(72) Erfinder: Benkeser, Michael, Dipl.-Ing. (FH), D-77886 Lauf (DE)
(74) Vertreter: Lichti, Heiner, Dipl.-Ing.

(56) Entgegenhaltungen:
- DE-A- 3 403 718
- DE-U- 6 610 323
- DE-U- 6 925 286
- DE-U- 8 530 572
- DE-U- 8 715 165
- DE-U- 8 804 317
- DE-U- 8 804 819

## Beschreibung

Die Erfindung betrifft einen Flüssigkeitsabscheider, insbesondere zum Trennen von Gemischen aus Wasser und spezifisch leichteren Flüssigkeiten, wie Oel, Benzin od. dgl., bestehend aus einem Behälter mit einem oben liegenden Einlauf mit Einlaufschikane und einem auf etwa gleicher Höhe sowie gegenüber dem Einlauf liegenden Auslauf, einem an den Einlaufteil anschließenden Abscheiderteil mit einem bodennahen in Abhängigkeit vom Flüssigkeitsniveau steuerbaren Ablauf und einem von diesem nach oben zum Auslauf reichenden Ablaufschacht. Ein solcher Flüssigkeitsabscheider ist beispielsweise aus der EP-A- 0 319 713 bekannt.

Flüssigkeitsabscheider zum Trennen von Oel-, Benzin-Wasser-geschmischen werden vielfältig benötigt, um den heutigen Abwasservorschriften Genüge zu leisten. Bei Leichtflüssigkeitsabscheidern handelt es sich regelmäßig um bloße Schwerkraftabscheider, während bei Koaleszenzabscheidern neben dem Schwerkraftprinzip Koaleszenzfilter eingesetzt werden, um auch feinste dispergierte Oeltröpfchen durch oberflächenaktives Material zurückzuhalten und zu größeren Oeltröpfchen umzubilden, die dann wiederum nach dem Schwerkraftprinzip aufsteigen. Solche Abscheider sollen einfach, wartungsfreundlich und preisgünstig ausgebildet sein, wobei ferner die Durchsatzleistung bei gewünscht hohem Abscheidegrad ein wesentliches Kriterium ist.

Im einfachsten Fall besteht ein solcher Abscheider aus einem Behälter, in den - im Falle eines Koaleszenzabscheiders - ein Koaleszenzmaterial eingesetzt ist. Über eine Einlaufschikane gelangt das Gemisch in den Behälter, durchwandert den Koaleszenzfilter und läuft über einen Ablauf ab. Bei diesen Abscheidern ist vor allem der nach dem Schwerkraftprinzip abgeschiedene Anteil relativ gering mit der Folge, daß sich der Koaleszenzfilter vergleichsweise schnell zusetzt und ausgetauscht werden muß. Bei einem anderen bekannten Prinzip liegen der Einlauf und der Auslauf etwa in gleicher Höhe im oberen Bereich des Behälters. Der zylindrische Koaleszenzfilter ist exzentrisch nahe der Auslaufseite des Behälters angeordnet und weist wiederum bodenseitig einen Ablauf auf, über den das Wasser über einen wandnahen Ablaufschacht zu dem oben liegenden Ablauf geführt wird. Aufgrund der etwas längeren Strömungswege und der dadurch vergrößerten Verweilzeit ergibt sich ein etwas verbesserter Abscheidegrad. Bei beiden bekannten Ausführungen wird der Ablauf von einem im Abscheiderteil befindlichen Schwimmerventil gesteuert.

Im wesentlichen gleiche Kriterien gelten für Leichtflüssigkeitsabscheider mit dem bereits angedeuteten Unterschied, daß sie lediglich nach dem Schwerkraftprinzip arbeiten.

Der Erfindung liegt die Aufgabe zugrunde, einen Flüssigkeitsabscheider vorzuschlagen, der sowohl für die Oel- als auch für die Benzinabscheidung geeignet ist und einen hohen Abscheidegrad aufweist.

Diese Aufgabe wird erfindungsgemäß dadurch gelöst, daß das Abscheiderteil aus einer an die Einlaufschikane anschließenden Ringkammer, die von der Wand des Behälters und einer das Behälterzentrum etwa konzentrisch umgebenden und sich in Richtung Auslaufseite erstreckenden und zur Auslantseite hin offenen Trennwand gebildet ist, und dem von der Trennwand gebildeten Innenraum im Behälterzentrum besteht, der den Ablauf in den Ablaufschacht aufweist.

Bei der erfindungsgemäßen Ausbildung wird das Abscheiderteil einerseits von der Ringkammer und andererseits von dem innerhalb derselben befindlichen Innenraum gebildet mit der Folge, daß das über den Einlauf zulaufende Flüssigkeitsgemisch sich vom Einlauf bis in die Behältertiefe ausbreitet und zugleich in der Ringkammer zunächst nach hinten in Richtung zum Auslauf strömt, um in dessen Bereich in den Innenraum wieder nach vorne umgelenkt zu werden und erst dann zum Ablauf zu gelangen. Hierdurch ergeben sich lange Strömungs- und Austauschwege mit der Folge, daß ein großer Teil der abzuscheidenden Flüssigkeit nach dem Schwerkraftprinzip getrennt wird. Die Leichtflüssigkeits-Tröpfchen haben ausreichend Zeit, um in beruhigter Strömung aufzusteigen und sich durch Anlagerung zu vergrößern. Es wird der Behälter über den gesamten Querschnitt und einen großen Teil der Höhe unter gleichzeitiger Umlenkung der Strömung ausgenutzt, so daß sich die Verweilzeit entsprechend erhöht.

Im Falle fein dispergierter Oeltröpfchen ist, wie bereits gesagt, ein Koaleszenzfilter vorgesehen. Dieses ist bei der erfindungsgemäßen Ausbildung des Abscheiders im Innenraum des Abscheiderteils angeordnet, wird also von dem zulaufenden Gemisch erst nach Durchströmen der Ringkammer und Einströmen in den Innenraum erreicht.

Dabei ist in besonders bevorzugter Ausführung vorgesehen, daß der Koaleszenzfilter im Innenraum des Abscheiderteils exzentrisch zum Behälterzentrum zur Einlaufseite hin versetzt angeordnet ist, so daß das Gemisch erst nach längstmöglicher Verweilzeit den Koaleszenzfilter erreicht.

Dem gleichen Zweck dient die Maßnahme, daß der Koaleszenzfilter als liegende Filterpatrone ausgebildet und an einer Tragwand zwischen Abscheiderteil und Ablaufschacht auswechselbar angeordnet ist, wobei der Koaleszenzfilter bodennah angeordnet ist.

Durch die liegende und bodennahe Anordnung des Koaleszenzfilters ergeben sich längste Strömungswege und größte Verweilzeiten für das Gemisch bis zum Erreichen des Koaleszenzfilters. Durch die Ausbildung als auswechselbare Filterpatrone läßt sich der Koaleszenzfilter leicht austauschen.

Gemäß einer weiterhin bevorzugten Ausführungsform ist vorgesehen, daß zwischen dem Abscheiderteil und dem Ablaufschacht eine am Boden des Behälters ansetzende und in Richtung zum Auslauf geneigt ansteigende Trennwand angeordnet ist, die den Ablauf aufweist.

Auch diese Ausführungsform trägt zu einer größtmöglichen Raumausnutzung bei und erzwingt eine nach unten gerichtete Durchströmung des Koaleszenzfilters.

Mit Vorteil ist dem in der Neigungsebene der Trennwand liegenden Ablauf eine Schwenkklappe zugeordnet, an der das Gestänge eines im Abscheiderteil befindlichen Schwimmers angelenkt ist. Die Leichtflüssigkeit (Oel, Benzin etc.) sammelt sich an der Oberfläche des Wassers an. Vermehrt sich die Leichtflüssigkeitsmenge, so steigt deren Schichtdicke und verdrängt den Wasserspiegel nach unten. Der Schwimmer sinkt mit der Trennlinie Leichtflüssigkeit-Wasser nach unten und schließt bei einer bestimmten, festgelegten Leichtflüssigkeitsmenge das Ventil der Schwenkklappe, womit ein Abfluß konzentrierten Öls oder ähnliches verhindert wird.

Gemäß einem zweckmäßigen Ausführungsbeispiel ist vorgesehen, daß die Tragwand für den Koaleszenzfilter senkrecht angeordnet und am oberen Ende über eine etwa horizontale, das Abscheiderteil nach unten begrenzende Sockelplatte mit der Schachtwand des Ablaufschachtes verbunden ist, und daß die geneigte Trennwand am Fuß der Tragwand ansetzt und in die Schachtwand des Ablaufschachtes übergeht.

Durch die Tragwand für den Koaleszenzfilter und die an deren Oberkante ansetzende Sockelplatte sowie die geneigte Trennwand wird eine vor dem Ablaufschacht liegende Kammer gebildet, innerhalb der die Schwenkklappe beweglich ist. Ihre Bewegung kann folglich keinen Einfluß auf die Trennvorgänge im Abscheiderteil ausüben.

Die horizontale Sockelplatte erlaubt es, das Gestänge des Schwimmers in dieser Sockelplatte zu führen, so daß keine gesonderte Schwimmerkammer erforderlich ist. Durch die weitere Maßnahme, daß die Führung des Gestänges in einer mit der Sockelplatte lösbar verbundenen Führungsplatte angeordnet ist, läßt sich die Führungsplatte lösen, so daß das Gestänge und die Schwenkklappe für Inspektionsarbeiten zugänglich sind.

In einer fertigungstechnisch besonders einfachen Ausführung ist die die Ringkammer bildende Trennwand polygonal aus miteinander verbundenen Platten gebildet.

In weiterhin vorteilhafter Ausgestaltung ist vorgesehen, daß die Einlaufschikane aus einem an den Einlauf ansetzenden und nach unten reichenden, kurzen Schacht gebildet ist, wobei mit Vorteil der Einlaufschacht eine oberhalb des Einlaufs ansetzende und nach unten geneigte obere Wandung aufweist. Dadurch wird das einlaufende Flüssigkeitsgemisch zunächst nach unten umgelenkt, ohne jedoch zu stark verwirbelt zu werden. Ist der Einlaufschacht nach unten offen ausgebildet, so strömt die Flüssigkeit in die Tiefe des Behälters und zugleich nach beiden Seiten in die Ringkammer ein. Es wird folglich der Behälter über die gesamte Höhe und den gesamten Querschnitt unter Umlenkung der Strömung aus der Ringkammer in den Innenraum ausgenutzt.

Nachstehend ist die Erfindung anhand eines in der Zeichnung wiedergegebenen Ausführungsbeispiels beschrieben. In der Zeichnung zeigen:
- Figur 1: eine Draufsicht auf eine Ausführungsform eines Leichtflüssigkeitsabscheiders;
- Figur 2: einen Längsschnitt durch den Flüssigkeitsabscheider gemäß Figur 1;
- Figur 3: eine der Figur 1 entsprechende Draufsicht auf einen Koaleszenzabscheider und
- Figur 4: einen Längsschnitt durch den Koaleszenzabscheider gemäß Figur 3.

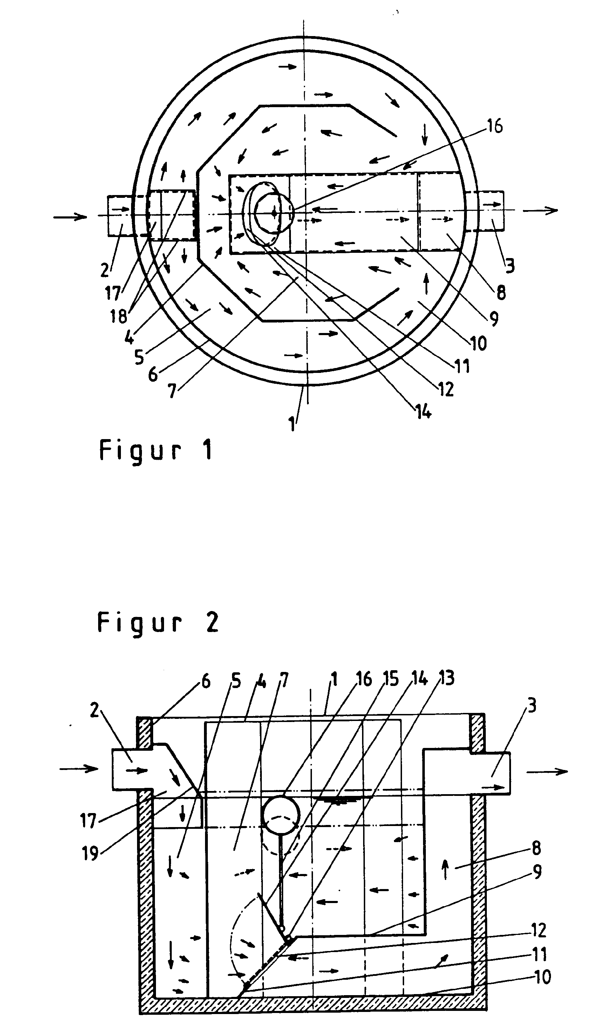

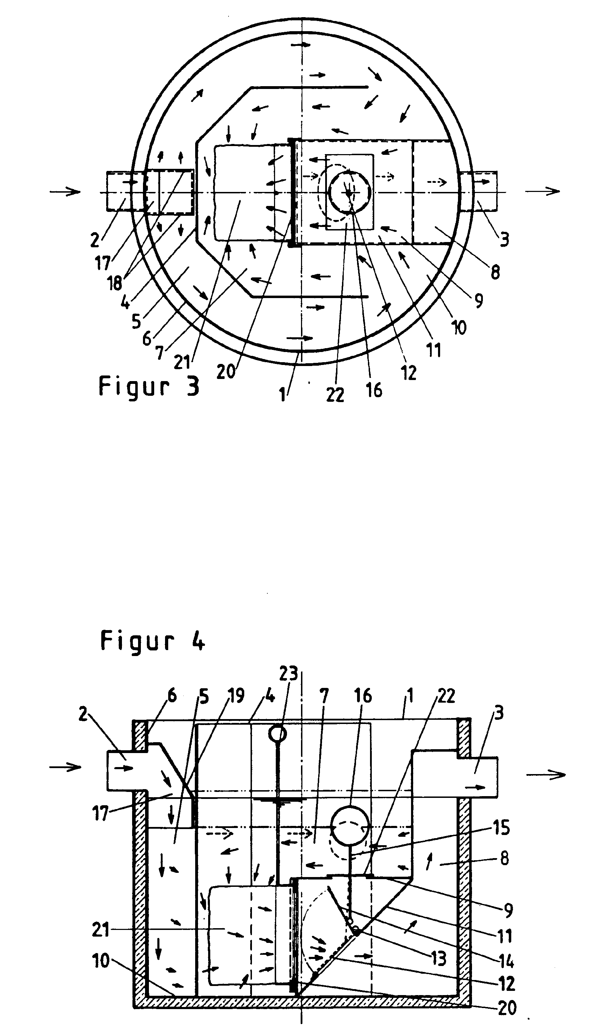

Die in den Figuren 1 bis 4 dargestellten Abscheider weisen einen Behälter 1 auf, der beim gezeigten Ausführungsbeispiel einen kreisrunden Querschnitt besitzt. Der Behälter 1 weist einen Einlauf 2 und einen Auslauf 3 auf, die, wie die Figuren 2 und 4 zeigen, im oberen Bereich des Behälters und auf etwa gleicher Höhe angeordnet sind.

In dem Behälter ist eine zum Behälterzentrum etwa konzentrisch verlaufende Trennwand 4 eingesetzt, die aus polygonal zusammengesetzten Platten gebildet ist. Sie begrenzt innenseitig eine Ringkammer 5, die außenseitig durch die Wandung 6 des Behälters begrenzt ist. Die Trennwand 4 reicht über das Behälterzentrum hinaus zur Auslaufseite des Behälters 1 und bildet an ihrer Innenseite im Behälterzentrum einen Innenraum 7. Die Ringkammer 5 und der Innenraum 7 bilden den eigentlichen Abscheiderteil. Ferner weist der Behälter 1 einen Ablaufschacht 8 auf, der durch vertikale Wände von dem Abscheiderteil getrennt ist und eine im wesentlichen horizontale Sockelplatte 9 besitzt, die parallel über dem Boden 10 des Behälters angeordnet ist und einen bodennahen Abschnitt des Ablaufschachtes 8 vom eigentlichen Abscheiderteil trennt. An die Sockelplatte 9 ist eine geneigt angeordnete Trennwand 11 angesetzt, die bis zum Boden 10 des Behälters 1 verläuft und einen in der Neigungsebene liegenden Ablauf 12 aufweist.

Dem Ablauf 12 ist eine bei 13 gelagerte Schwenkklappe 14 zugeordnet, an der das Gestänge 15 eines Schwimmers 16 angelenkt ist. Der Schwimmer 16 steuert die Schwenkklappe 14 entsprechend dem Flüssigkeitsstand im Behälter 1, schließt sie also bei Absinken des Wasserspiegels unter ein bestimmtes Niveau infolge der Ansammlung von leichterem Oel, Benzin u. dgl.

Am Einlauf 2 des Behälters 1 ist eine Einlaufschikane 17 angeordnet, die einen nach unten offenen, kurzen Schacht bildet und aus parallelen senkrechten Wänden 18 und einer oberhalb des Einlaufs ansetzenden schräg nach unten geneigten Wandung 19 besteht.

Wie in Figur 2 angedeutet, wird das über den Einlauf 2 zuströmende Flüssigkeitsgemisch mittels der Einlaufschikane 17 nach unten in die Tiefe des Behälters umgelenkt und strömt über die gesamte Höhe des Behälters in der Ringkammer 5 in Richtung zum Auslauf. Vor dem Ablaufschacht 8 wird die Flüssigkeit umgelenkt in den Innenraum 7 und verläßt diesen wiederum nahe der Einlaufseite im bodennahen Bereich über den Ablauf 12, gelangt schließlich in den aufsteigenden Ablaufschacht 8 und läuft über den Auslauf 3 ab.

In den Figuren 3 und 4 ist ein Koaleszenzabscheider gezeigt, der im wesentlichen den gleichen Aufbau aufweist wie der Leichtflüssigkeitsabscheider gemäß Figur 1 und 2, weshalb hier nur die unterscheidenden Merkmale beschrieben werden. Die Sockelplatte 9, die das Abscheiderteil vom Ablaufschacht trennt, ist in diesem Fall etwas höher gesetzt. An die horizontale Sockelplatte schließt zur Einlaufseite hin eine im wesentlichen vertikale Tragwand 20 an, die einen Koaleszenzfilter 21 auswechselbar aufnimmt. Der Koaleszenzfilter ist zu diesem Zweck an einem Gestänge 23 angebracht, mittels dessen er eingesetzt und ausgebaut werden kann. Die Sockelplatte 9 und die Tragwand 20 begrenzen zusammen mit der geneigt angeordneten Trennwand 11 eine Sockelkammer. In der Trennwand 11 ist wiederum der Ablauf 12 bodennah angeordnet. Die bei 13 angelenkte Schwenkklappe 14 für den Ablauf 12 ist wiederum mit einem Schwimmer 16 verbunden. Die Schwenkklappe 14 wird also innerhalb der Sockelkammer bewegt.

Der Koaleszenzfilter 21 ist bodennah im Bereich der Einlaufseite des Behälters angeordnet. Auch hier werden der Flüssigkeit längstmögliche Strömungswege aufgezwungen, indem sie vom Einlauf 2 mittels der Einlaufschikane 17 über die gesamte Behältertiefe geführt wird, anschließend durch die Ringkammer 5 bis zur Auslaufseite des Behälters geführt, dann in den Innenraum 7 umgelenkt und bodennah im Bereich der Einlaufseite erst den Koaleszenzfilter 21 erreicht. Das den Koaleszenzfilter 21 verlassende gereinigte Wasser gelangt bei geöffneter Schwenkklappe 14 durch den Ablauf 12 in den Ablaufschacht 8 und von dort in den Auslauf 3.

Der Schwimmer 16 bzw. dessen Gestänge 15 ist in der horizontalen Sockelwand 9 geführt. Zu diesem Zweck weist die Sockelwand 9 eine größere Aussparung auf, die durch eine lösbare Führungsplatte 22 verschlossen ist. Nach Lösen der Führungsplatte 22 ist die darunter befindliche Sockelkammer mit der Schwenkklappe 14 zugänglich.

## Patentansprüche

1. Flüssigkeitsabscheider, insbesondere zum Trennen von Gemischen aus Wasser und spezifisch leichteren Flüssigkeiten, wie Oel, Benzin od. dgl., bestehend aus einem Behälter (1) mit einem oben liegenden Einlauf (2) mit Einlaufschikane (17) und einem auf etwa gleicher Höhe sowie gegenüber dem Einlauf (2) liegenden Auslauf (3), einem an den Einlaufteil anschließenden Abscheiderteil mit einem bodennahen in Abhängigkeit vom Flüssigkeitsniveau steuerbaren Ablauf (12) und einem von diesem nach oben zum Auslauf (3) reichenden Ablaufschacht (8), dadurch gekennzeichnet, daß das Abscheiderteil aus einer an die Einlaufschikane (17) anschließenden Ringkammer (5), die von der Wand (6) des Behälters (1) und einer das Behälterzentrum etwa konzentrisch umgebenden und sich in Richtung Auslaufseite erstreckenden und zur Auslanfseite hin offenen Trennwand (4) gebildet ist, und dem von der Trennwand gebildeten Innenraum (7) im Behälterzentrum besteht, der den Ablauf (12) in den Ablaufschacht (8) aufweist.

2. Flüssigkeitsabscheider nach Anspruch 1 mit einem Koaleszenzfilter, dadurch gekennzeichnet, daß der Koaleszenzfilter (21) im Innenraum (7) des Abscheiderteils angeordnet ist.

3. Flüssigkeitsabscheider nach Anspruch 2, dadurch gekennzeichnet, daß der Koaleszenzfilter (21) im Innenraum (7) des Abscheiderteils exzentrisch zum Behälterzentrum zur Einlaufseite hin versetzt angeordnet ist.

4. Flüssigkeitsabscheider nach einem der Ansprüche 2 oder 3, dadurch gekennzeichnet, daß der Koaleszenzfilter (21) als liegende Filterpatrone ausgebildet und an einer Tragwand (20) zwischen Abscheiderteil und Ablaufschacht (8) auswechselbar angeordnet ist.

5. Flüssigkeitsabscheider nach einem der Ansprüche 2 bis 4, dadurch gekennzeichnet, daß der Koaleszenzfilter (21) bodennah angeordnet ist.

6. Flüssigkeitsabscheider nach einem der Ansprüche 1 bis 5, dadurch gekennzeichnet, daß zwischen dem Abscheiderteil (5, 7) und dem Ablaufschacht (8) eine am Boden (10) des Behälters (1) ansetzende und in Richtung zum Auslauf (3) geneigt ansteigende Trennwand (11) angeordnet ist, die den Ablauf (12) aufweist.

7. Flüssigkeitsabscheider nach einem der Ansprüche 1 bis 6, dadurch gekennzeichnet, daß dem in der Neigungsebene der Trennwand (11) liegenden Ablauf (12) eine Schwenkklappe (14) zugeordnet ist, an der das Gestänge (15) eines im Abscheiderteil (5, 7) befindlichen Schwimmers (16) angelenkt ist.

8. Flüssigkeitsabscheider nach einem der Ansprüche 4 bis 7, dadurch gekennzeichnet, daß die Tragwand (20) für den Koaleszenzfilter (21) senkrecht angeordnet und am oberen Ende über eine etwa horizontale, das Abscheiderteil (5, 7) nach unten begrenzende Sockelplatte (9) mit der Schachtwand des Ablaufschachtes (8) verbunden ist, und daß die geneigte Trennwand (11) am Fuß der Tragwand (20) ansetzt und in die Schachtwand des Ablaufschachtes (8) übergeht.

9. Flüssigkeitsabscheider nach einem der Ansprüche 7 oder 8, dadurch gekennzeichnet, daß das Gestänge (15) des Schwimmers (16) in der Sockelplatte (9) geführt ist.

10. Flüssigkeitsabscheider nach Anspruch 8 oder 9, dadurch gekennzeichnet, daß die Führung des Gestänges (15) in einer mit der Sockelplatte (9) lösbar verbundenen Führungsplatte (22) angeordnet ist.

11. Flüssigkeitsabscheider nach einem der Ansprüche 1 bis 10, dadurch gekennzeichnet, daß die die Ringkammer (5) bildende Trennwand (4) polygonal aus miteinander verbundenen Platten gebildet ist.

12. Flüssigkeitsabscheider nach einem der Ansprüche 1 bis 11, dadurch gekennzeichnet, daß die Einlaufschikane (17) aus einem an den Einlauf (2) ansetzenden und nach unten reichenden, kurzen Schacht (18, 19) gebildet ist.

13. Flüssigkeitsabscheider nach einem der Ansprüche 1 bis 12, dadurch gekennzeichnet, daß der Einlaufschacht (18, 19) eine oberhalb des Einlaufs (2) ansetzende und nach unten geneigte obere Wandung (19) aufweist.

14. Flüssigkeitsabscheider nach einem der Ansprüche 1 bis 13, dadurch gekennzeichnet, daß der Einlaufschacht (18, 19) nach unten offen ist.

## Claims

1. Liquid separator, particularly for separating mixtures of water and specifically lighter liquids, such as oil, petrol, etc., comprising a container (1) with an inlet (2) at the top and having an inlet baffle plate (17) and an outlet (3) roughly at the same height and facing the inlet (2), a separator part connected to the inlet part having a drain (11) close to the bottom and controllable as a function of the liquid level and a drain shaft (8) extending upwards from the drain (11) to the outlet (3), characterized in that the separator part comprises an annular chamber (5) connected to the inlet baffle plate (17), which is formed by the wall (6) of the container (1) and a partition (4) roughly concentrically surrounding the container centre, which extends in the direction of the outlet side and is open towards the latter and the inner area (7) formed by the partition is located in the container centre, which has the drain (12) into the drain shaft (8).

2. Liquid separator according to claim 1 with a coalescence filter, characterized in that the coalescence filter (21) is located in the inner area (7) of the separator part.

3. Liquid separator according to claim 2, characterized in that the coalescence filter (21) in the inner area (7) of the separator part is eccentrically displaced with respect to the container centre towards the inlet side.

4. Liquid separator according to one of the claims 2 or 3, characterized in that the coalescence filter (21) is constructed as a horizontal filter cartridge and is interchangeably arranged on a supporting wall (20) between the separator part and the drain shaft (8).

5. Liquid separator according to one of the claims 2 to 4, characterized in that the coalescence filter (21) is positioned close to the bottom.

6. Liquid separator according to one of the claims 1 to 5, characterized in that between the separator part (5,7) and the drain shaft (8) is provided a partition (11) attached to the bottom (10) of the container (1) and inclined in the direction of the outlet (3) and which has the drain (12).

7. Liquid separator according to one of the claims 1 to 6, characterized in that with the drain (12) located in the inclination plane of the partition (11) is associated a swivel flap (14), to which is articulated the rod (15) of a float (16) located in the separator part (5,7).

8. Liquid separator according to one of the claims 4 to 7, characterized in that the supporting wall (20) for the coalescence filter (21) is positioned vertically and is connected at the upper end by means of an approximately horizontal base plate (9) downwardly bounding the separator part (5,7) to the shaft wall of the drain shaft (8) and that the inclined partition (11) is attached to the foot of the supporting wall (20) and passes into the shaft wall of the drain shaft (8).

9. Liquid separator according to one of the claims 7 or 8, characterized in that the rod (15) of the float (16) is guided in the base plate (9).

10. Liquid separator according to claim 8 or 9, characterized in that the guide of the rod (15) is located in a guide plate (22) detachably connected to the base plate (9).

11. Liquid separator according to one of the claims 1 to 10, characterized in that the partition (4) forming the annular chamber (5) is formed in polygonal manner from interconnected plates.

12. Liquid separator according to one of the claims 1 to 11, characterized in that the inlet baffle plate (17) is formed from a short shaft (18) attached to the inlet (2) and which extends downwards.

13. Liquid separator according to one of the claims 1 to 12, characterized in that the inlet shaft (18,19) has an upper wall (19), which is attached above the inlet (2) and slopes downwards.

14. Liquid separator according to one of the claims 1 to 13, characterized in that the inlet shaft (18,19) is open at the top.

## Revendications

1. Séparateur de liquide, notamment pour la séparation de mélanges d'eau et de liquides spécifiquement plus légers tels que l'huile, l'essence, ou analogues, consistant en un récipient (1) présentant une entrée (2) disposée en partie supérieure munie d'une chicane d'entrée (17) et une sortie (3) disposée à peu près à la même hauteur que l'entrée (2) et en regard de celle-ci, un compartiment de séparation relié à l'unité d'entrée, présentant une sortie (12) proche du fond commandée en fonction du niveau du liquide, et un puits de sortie (8) dirigé vers le haut, à partir de cette sortie (12) vers la sortie (3), caractérisé en ce que le compartiment de séparation consiste en une chambre annulaire (5) reliée à la chicane d'entrée (17), formée par la paroi (6) du récipient (1) et une paroi de séparation (4) entourant de manière approximativement concentrique le centre du récipient et s'étendant vers le côté de la sortie en étant ouverte de ce côté, et l'espace intérieur (7) formé par la paroi de séparation, celui-ci contenant la sortie (12) dans le puits de sortie (8).

2. Séparateur selon la revendication 1, présentant un filtre à coalescence, caractérisé en ce que ce filtre à coalescence (21) est disposé dans l'espace intérieur (7) du compartiment de séparation.

3. Séparateur selon la revendication 2, caractérisé en ce que le filtre à coalescence (21) est disposé dans l'espace intérieur (7) du compartiment de séparation de manière excentrée par rapport au centre du récipient et décalée vers l'unité d'entrée.

4. Séparateur selon l'une des revendications 2 ou 3, caractérisé en ce que le filtre à coalescence (21) est conformé selon une cartouche-filtre disposée à plat et est placé de façon interchangeable contre une paroi-support (20) entre le compartiment de séparation et le puits de sortie (8).

5. Séparateur selon l'une des revendications 2 à 4, caractérisé en ce que le filtre à coalescence (21) est disposé près du fond.

6. Séparateur selon l'une des revendications 1 à 5, caractérisé en ce qu'est disposée entre le compartiment de séparation (5,7) et le puits de sortie (8) une paroi de séparation (11) placée contre le fond du récipient et dirigée vers le haut en étant inclinée en direction de la sortie, paroi présentant la sortie (12).

7. Séparateur selon l'une des revendications 1 à 6, caractérisé en ce que la sortie (12) située dans le plan incliné de la paroi de séparation (11) est munie d'une vanne pivotante (14) sur laquelle est articulée la tringle (15) d'un flotteur (16) situé dans le compartiment de séparation (5,7).

8. Séparateur selon l'une des revendications 4 à 7, caractérisé en ce que la paroi-support (20) pour le filtre à coalescence (21) est disposée verticalement et est reliée à la paroi du puits de sortie (8) par l'intermédiaire d'une plaque-socle (9) à peu près horizontale limitant le compartiment de séparation (5,7) vers le bas, et en ce que la paroi de séparation (11) inclinée commence au bas de la paroi-support (20) et se poursuit jusqu'à la paroi du puits de sortie (8).

9. Séparateur selon l'une des revendications 7 ou 8, caractérisé en ce que la tringle (15) du flotteur (16) est guidée dans la plaque-socle (9).

10. Séparateur selon l'une des revendications 8 ou 9, caractérisé en ce que le guidage de la tringle (15) est disposé dans une plaque de guidage (22) fixée de manière amovible à la plaque-socle (9).

11. Séparateur selon l'une des revendications 1 à 10, caractérisé en ce que la paroi de séparation (4) formant la chambre annulaire (5) est réalisée polygonale au moyen de plaques reliées entre elles.

12. Séparateur selon l'une des revendications 1 à 11, caractérisé en ce que la chicane d'entrée (17) est formée d'un puits (18,19) court, commençant à l'entrée (2) et dirigé vers le bas.

13. Séparateur selon l'une des revendications 1 à 12, caractérisé en ce que le puits d'entrée (18,19) présente une paroi supérieure (19) commençant au-dessus de l'entrée (2) et dirigée vers le bas.

14. Séparateur selon l'une des revendications 1 à 13, caractérisé en ce que le puits d'entrée (18,19) est ouvert vers le bas.
